# EUROPEAN PATENT APPLICATION

(11) **EP 4 822 814 A1**
(43) Date of publication of application: **14.10.2026**
(21) Application number: 25215844.9
(22) Date of filing: 14.11.2025
(51) Int. Cl.: H01M 10/48, H01M 10/613, H01M 10/627, H01M 10/63, H01M 10/6563, H01M 50/204, H01M 50/251

(54) **ENERGY STORAGE SYSTEM AND CONTROL METHOD THEREOF**

(30) Priority: 08.04.2025 CN 202510431347
(71) Applicant: Zhejiang Jinko Energy Storage Co., Ltd., Jiaxing, Zhejiang (CN)
(72) Inventor: LIU, Muyu, Haining, Zhejiang (CN); ZHANG, Luhua, Haining, Zhejiang (CN); WANG, Shiming, Haining, Zhejiang (CN)
(74) Representative: Balder IP Law, S.L.

(57) **Abstract**

Provided are an energy storage system and a control method. The energy storage system includes: an energy storage cabinet body, a first filtering device, an air duct switch, a cooling unit, a first sensor, a second sensor, and a controller. The energy storage cabinet body is configured to accommodate a battery module and including an air intake passage, and a first cabinet body air inlet and a second cabinet body air inlet that are in fluid communication with the air intake passage. The first filtering device is disposed at the first cabinet body air inlet. The air duct switch is disposed inside the air intake passage and between the first cabinet body air inlet and the second cabinet body air inlet. The cooling unit is disposed inside the energy storage cabinet body and including a unit air inlet in fluid communication with the first air intake section.

## Description

### TECHNICAL FIELD

The present disclosure relates to the field of energy storage technologies, and in particular, to an energy storage system and a control method thereof.

### BACKGROUND

The energy storage system is provided with a cooling unit configured to adjust an internal temperature of the energy storage system to avoid overheating of a battery cell. The cooling unit is provided with an air inlet and an air outlet. Ambient air is drawn in from the air inlet to cool a cooling medium of the cooling unit. During operation of the cooling unit, dust may enter the cooling unit or even the entire energy storage system.

### SUMMARY

Embodiments of the present disclosure provide an energy storage system and a control method thereof.

According to some embodiments of the present disclosure, an aspect of embodiments of the present disclosure provides an energy storage system, including an energy storage cabinet body, a first filtering device, an air duct switch, an air duct switch, a cooling unit, a first sensor, a second sensor, and a controller. The energy storage cabinet body is configured to accommodate a battery module and including an air intake passage, and a first cabinet body air inlet and a second cabinet body air inlet that are in fluid communication with the air intake passage. The first filtering device is disposed at the first cabinet body air inlet. The air duct switch is disposed inside the air intake passage and between the first cabinet body air inlet and the second cabinet body air inlet, and divides the air intake passage into a first air intake section in fluid communication with the first cabinet body air inlet and a second air intake section in fluid communication with the second cabinet body air inlet. The cooling unit is disposed inside the energy storage cabinet body and including a unit air inlet in fluid communication with the first air intake section. The first sensor is configured to detect a temperature inside the energy storage cabinet body. The second sensor is configured to detect a particulate matter concentration in an environment where the energy storage system is located. The controller is electrically connected to each of the first sensor, the second sensor, and the air duct switch and configured to control opening and closing of the air duct switch according to the temperature detected by the first sensor and the particulate matter concentration detected by the second sensor.

In some embodiments, in response to the air duct switch being opened, the first air intake section is in fluid communication with the second air intake section by the air duct switch, and in response to the air duct switch being closed, the first air intake section is separated from the second air intake section by the air duct switch.

In some embodiments, the first cabinet body air inlet is spaced from the unit air inlet in an air intake direction of the first cabinet body air inlet.

In some embodiments, from an end of the air duct switch adjacent to the unit air inlet to an end of the air duct switch adjacent to the first cabinet body air inlet, the air duct switch is arranged to gradually tilt toward the second cabinet body air inlet.

In some embodiments, the first cabinet body air inlet has an area greater than an area of the second cabinet body air inlet.

In some embodiments, a ratio of the area of the first cabinet body air inlet to the area of the second cabinet body air inlet is 1 to 3.

In some embodiments, the ratio of the area of the first cabinet body air inlet to the area of the second cabinet body air inlet is 2.

In some embodiments, the energy storage system further includes a second filtering device disposed at the second cabinet body air inlet, where a filtration grade of the second filtering device is lower than a filtration grade of the first filtering device.

In some embodiments, the cooling unit has a first housing wall provided with the unit air inlet, the first housing wall and a cabinet body wall of the energy storage cabinet body enclose to form the air intake passage, the energy storage cabinet body has a first cabinet body wall opposite to the first housing wall, the first cabinet body air inlet and the second cabinet body air inlet are disposed on the first cabinet body wall, and the air duct switch is disposed between the first housing wall and the first cabinet body wall.

In some embodiments, the air duct switch is a motorized louver.

According to some embodiments of the present disclosure, another aspect of embodiments of the present disclosure provides a control method for an energy storage system, applied to the energy storage system described above, and including: acquiring the temperature detected by the first sensor and the particulate matter concentration detected by the second sensor; and controlling opening and closing of the air duct switch according to the temperature detected by the first sensor and the particulate matter concentration detected by the second sensor.

In some embodiments, controlling opening and closing of the air duct switch according to the temperature detected by the first sensor and the particulate matter concentration detected by the second sensor includes: in response to the temperature detected by the first sensor being greater than a first temperature threshold or the particulate matter concentration detected by the second sensor being less than a first particulate matter concentration threshold, controlling the air duct switch to open; and in response to the temperature detected by the first sensor being less than the first temperature threshold and the particulate matter concentration detected by the second sensor is greater than the first particulate matter concentration threshold, controlling the air duct switch to close.

In some embodiments, controlling opening and closing of the air duct switch according to the temperature detected by the first sensor and the particulate matter concentration detected by the second sensor includes: in response to the temperature detected by the first sensor being less than a second temperature threshold and the particulate matter concentration detected by the second sensor being greater than a second particulate matter concentration threshold, calculating an opening degree value of the air duct switch based on a preset correspondence, the temperature detected by the first sensor, and the particulate matter concentration detected by the second sensor, where the preset correspondence is configured to characterize a correspondence relationship among the opening degree value, the temperature, and the particulate matter concentration; in response to the calculated opening degree value of the air duct switch being less than a first preset opening degree value, adjusting an opening degree of the air duct switch to the first preset opening degree value; in response to the calculated opening degree value of the air duct switch being greater than the first preset opening degree value and less than a second preset opening degree value, adjusting the opening degree of the air duct switch to the calculated opening degree value of the air duct switch, where the second preset opening degree value is greater than the first preset opening degree value; and in response to the calculated opening degree value of the air duct switch being greater than the second preset opening degree value, adjusting the opening degree of the air duct switch to the second preset opening degree value.

In some embodiments, controlling opening and closing of the air duct switch according to the temperature detected by the first sensor and the particulate matter concentration detected by the second sensor includes: acquiring an operating parameter of the cooling unit; in response to the acquired operating parameter of the cooling unit indicating that the cooling unit is in a standby state, controlling the air duct switch to close; and in response to the acquired operating parameter of the cooling unit indicating that the cooling unit is in a working state, controlling opening and closing of the air duct switch according to the temperature detected by the first sensor and the particulate matter concentration detected by the second sensor.

In some embodiments, in response to the air duct switch being opened, the first air intake section is in fluid communication with the second air intake section by the air duct switch, and in response to the air duct switch being closed, the first air intake section is separated from the second air intake section by the air duct switch.

In some embodiments, the first cabinet body air inlet is spaced from the unit air inlet in an air intake direction of the first cabinet body air inlet.

In some embodiments, from an end of the air duct switch adjacent to the unit air inlet to an end of the air duct switch adjacent to the first cabinet body air inlet, the air duct switch is arranged to gradually tilt toward the second cabinet body air inlet.

In some embodiments, the first cabinet body air inlet has an area greater than an area of the second cabinet body air inlet.

In some embodiments, a ratio of the area of the first cabinet body air inlet to the area of the second cabinet body air inlet is 1 to 3.

In some embodiments, the ratio of the area of the first cabinet body air inlet to the area of the second cabinet body air inlet is 2.

### BRIEF DESCRIPTION OF THE DRAWINGS

One or more embodiments are illustrated by the corresponding figures in the drawings. These exemplary illustrations do not constitute limitations on the embodiments. Unless otherwise specified, the figures in the drawings are not subject to scale limitations. In order to explain the technical solutions in embodiments of the present disclosure or in the conventional technologies more clearly, a brief introduction to the drawings used in embodiments will be provided below. It is understandable that, the drawings in the following description are only some embodiments of the present disclosure. For those of ordinary skill in the art, some other drawings can also be acquired based on these drawings without creative efforts.
FIG. 1 is a schematic structure view of a portion of an energy storage system according to a first embodiment of the present disclosure.
FIG. 2 is a schematic structure view of an air duct switch in FIG. 1.
FIG. 3 is a cross-sectional view of the air duct switch in FIG. 2.
FIG. 4 is a schematic structure view of a control portion of the energy storage system in FIG. 1.
FIG. 5 is a schematic structure view of a portion of an energy storage system according to a second embodiment of the present disclosure.
FIG. 6 is a flowchart of a control method for an energy storage system according to an embodiment of the present disclosure.

### List of reference numeral

| | | | |
|---|---|---|---|
| 100 | energy storage system; | 1 | energy storage cabinet body |
| 11 | first cabinet body wall; | 2 | air intake passage |
| 21 | first air intake section; | 22 | second air intake section |
| 3a | first cabinet body air inlet; | 3b | second cabinet body air inlet |
| 3c | third cabinet body air inlet; | 31 | protective screen |
| 4 | air duct switch; | 4a | motorized louver |
| 5 | cooling unit; | 51 | unit air inlet |
| 52 | first housing wall; | 6a | first sensor |
| 6b | second sensor; | 7 | controller |

### DETAILED DESCRIPTION OF THE EMBODIMENTS

As known from the background part, a cooling unit is installed in the energy storage system. The cooling unit is provided with an air inlet and an air outlet. The cooling unit, through a fan installed at the air outlet, draws in ambient air from the air inlet to cool a cooling medium in a condenser of the cooling unit. A filtering device such as filter cotton or a filter screen is usually provided at the air inlet of the cooling unit. However, installing the filtering device increases air resistance, which may cause derating of the cooling unit.

Embodiments of the present disclosure provide an energy storage system and a control method thereof. An energy storage cabinet body is provided with a first cabinet body air inlet and a second cabinet body air inlet as two types of cabinet body air inlets. Only the first cabinet body air inlet is provided with a first filtering device. When an air duct switch is open, the cooling unit is connected to the first cabinet body air inlet and the second cabinet body air inlet through an air intake passage, thereby enabling the cooling unit to draw air simultaneously through the first cabinet body air inlet and the second cabinet body air inlet. When the air duct switch is closed, the cooling unit is connected only to the first cabinet body air inlet through the air intake passage, thereby enabling the cooling unit to draw air only through the first cabinet body air inlet provided with the first filtering device. Thus, a controller can, based on a temperature inside the energy storage cabinet detected by a first sensor and a particulate concentration in an environment where the energy storage system is located detected by a second sensor, control opening and closing of the air duct switch to achieve switching of an air intake mode of the cooling unit under different environmental conditions. This ensures that the energy storage system can meet dust prevention requirements under different environmental conditions while also preventing derating of the cooling unit caused by installation of the filtering device at the air inlet.

In the description of the embodiments of the present disclosure, the technical terms "first" "second" and the like are only configured to distinguish different objects and cannot be understood as indicating or implying relative importance or implicitly indicating the number, specific order, or primary and secondary relationship of the indicated technical features. In the description of the embodiments of the present disclosure, "a plurality of" means at least two, unless otherwise specified.

Reference herein to "embodiment" means that a particular feature, structure, or characteristic described in connection with the embodiment may be included in at least one embodiment of the present disclosure. The appearances of this phrase in various places in the specification are not necessarily all referring to the same embodiment, nor are separate or alternative embodiments that are mutually exclusive with other embodiments. It is explicitly and implicitly understood by those skilled in the art that the embodiments described herein may be combined with other embodiments.

In the description of the embodiments of the present disclosure, the term "and/or" is merely an association relationship describing associated objects, indicating that there may be three relationships, for example, A and/or B, which may indicate that A exists, A and B exist at the same time, and B exists. In addition, the character "/" in this specification generally indicates an "or" relationship between the associated objects.

In the description of the embodiments of the present disclosure, the term "a plurality of" means at least two, similarly, "a plurality of groups" means at least two groups, and "a plurality of pieces" means at least two pieces.

In the description of the embodiments of the present disclosure, orientation or positional relationship indicated by technical terms "center", "transverse", "longitudinal", "length", "width", "thickness", "up", "down", "front", "rear", "left", "right", "vertical", "horizontal", "top", "bottom", "inside" "outside", "clockwise", "counterclockwise", "axial", "radial", "circumferential" and the like are orientations or positional relationships based on those shown in the accompanying drawings, which are intended only to facilitate the description of embodiments of the present disclosure and to simplify the description, and are not intended to indicate or imply that the device or element referred to must have a particular orientation, be constructed and operated with a particular orientation, and therefore are not to be construed as a limitation of the embodiments of the present disclosure.

In the description of the embodiments of the present disclosure, unless otherwise specified and limited, technical terms "mounted", "connected", "connecting", "fixed", etc. are to be understood in a broad sense. For example, it may be a fixed connection, a removable connection, or a one-piece connection, it may be a mechanical connection, or an electrical connection, it may be a direct connection, or an indirect connection through an intermediate medium, and it may be a connection between two elements or an interaction between the two elements. For those of ordinary skill in the art, specific meanings of the above terms in the embodiments of the present disclosure may be understood according to specific situations.

In the accompanying drawings corresponding to the embodiments of the present disclosure, for better understanding and ease of description, the thickness and area of a layer are enlarged. When a component (e.g., a layer, a film, a region, or a substrate) is described as being formed over another component or over a surface of another component, the component may be "directly" on the surface of another component, or a third component may exist between the two components. In contrast, when a component is described as being formed on a surface of another component or a surface of a component is formed or provided with another component, there is no third component between the two components. In addition, when a component is described as being "substantially" formed on/over another component, it means that the component is not formed on/over the entire surface (or front surface) of another component, nor on/over a portion of the edge of the entire surface.

In the description of the embodiments of the present disclosure, when a component "includes" another component, unless otherwise stated, other components are not excluded, and other components may be further included in the component. In addition, when a component such as a layer, a film, a region, or a plate is referred to as being "over/disposed over" another component, it may be "directly on" another component (i.e., being on the surface of another component and there is no other component therebetween), or another component may exist therebetween. Furthermore, when a component such as a layer, film, region, plate, etc. is "directly on" another component, or when a component such as a layer, film, region, plate, etc. is disposed on the surface of another component, it means that no other component is disposed therebetween.

The terminology used in the description of the various described embodiments herein is for the purpose of describing particular embodiments only and is not intended to be limiting. As used in the description of the various embodiments described and the appended claims, "the portion" is also intended to include the plural forms as well, unless the context clearly indicates otherwise. The component includes a layer, a film, a region, or a plate, etc.

The following describes the embodiments of the present disclosure in detail with reference to the accompanying drawings. However, a person of ordinary skill in the art may understand that in the embodiments of the present disclosure, many technical details are provided to make readers better understand the embodiments of the present disclosure. However, even without these technical details and various changes and modifications based on the following embodiments, the technical solutions claimed in the embodiments of the present disclosure can be implemented.

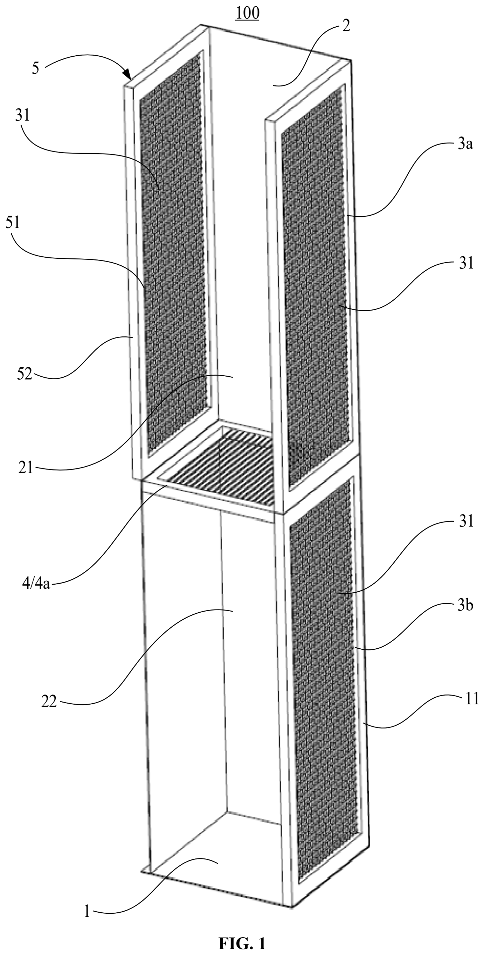

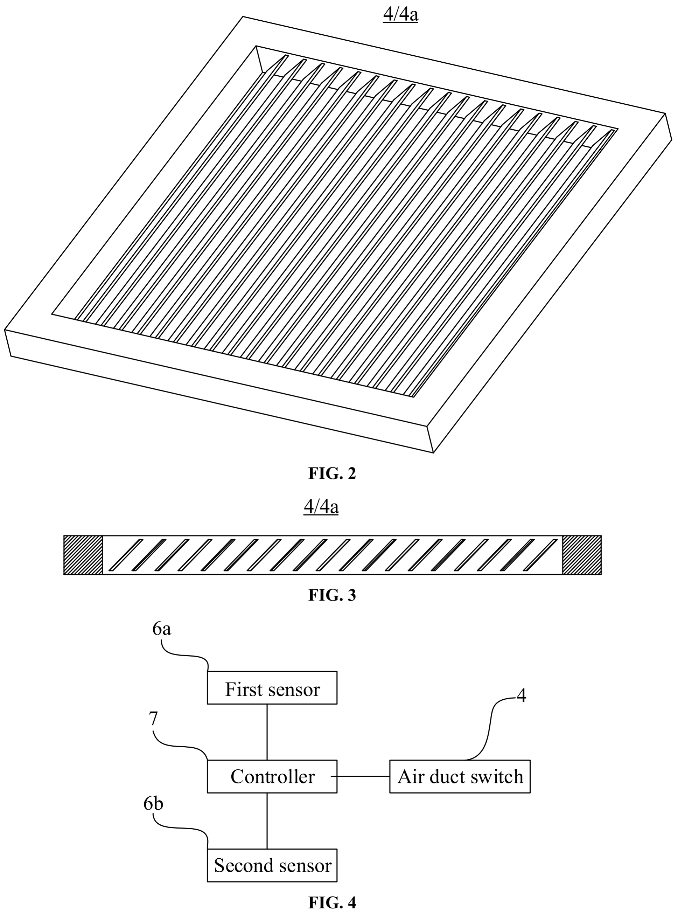

FIGS. 1 to 5 are schematic structure views of an energy storage system according to various embodiments of the present disclosure.

With reference to FIGS. 1 to 5, in some embodiments, the energy storage system 100 includes an energy storage cabinet body 1, an air duct switch 4, a cooling unit 5, a first sensor 6a, a second sensor 6b, and a controller 7. The energy storage cabinet body 1 is provided with a battery module (not shown). An air intake passage 2 is formed inside the energy storage cabinet body 1. The energy storage cabinet body 1 is provided with a first cabinet body air inlet 3a and a second cabinet body air inlet 3b that communicate with the air intake passage 2. A first filtering device (not shown) is provided at the first cabinet body air inlet 3a. The air duct switch 4 is disposed spaced apart in the air intake passage 2, and the air duct switch 4 is located between the first cabinet body air inlet 3a and the second cabinet body air inlet 3b. The cooling unit 5 is disposed inside the energy storage cabinet body 1. The cooling unit 5 is provided with a unit air inlet 51, and the unit air inlet 51 is in fluid communication with a portion of the air intake passage 2 that is located on a side of the air duct switch 4 close to the first cabinet body air inlet 3a. The first sensor 6a is configured to detect a temperature inside the energy storage cabinet body 1. The second sensor 6b is configured to detect a particulate concentration in an environment where the energy storage system 100 is located. The controller 7 is electrically connected to the first sensor 6a, the second sensor 6b, and the air duct switch 4. The controller 7 is configured to control opening and closing of the air duct switch 4 based on a temperature detected by the first sensor 6a and a particulate concentration detected by the second sensor 6b.

Specifically, the energy storage system 100 includes the energy storage cabinet body 1. The energy storage cabinet body 1 is configured to isolate components such as internal electrical elements of the energy storage system 100 from an external environment. The cooling unit 5 and the battery module are disposed inside the energy storage cabinet body 1. The cooling unit 5 may be an air cooling unit or a liquid cooling unit, etc. The cooling unit 5 is capable of preventing the battery module from experiencing overheating of battery cells. Hereinafter, the energy storage system 100 will be described as an immersed energy storage system, and the cooling unit 5 will be described as a liquid cooling unit by way of example. The cooling unit 5 is capable of adjusting a temperature of a cooling liquid in the energy storage system 100 to avoid overheating of battery cells.

The cooling unit 5 includes a housing. The housing is provided with a unit air inlet 51 and a unit air outlet. A unit fan is disposed inside the housing. When the unit fan operates, air is drawn into the cooling unit 5 from the unit air inlet 51, carries away heat, and is then discharged from the unit air outlet. An air intake passage 2 is formed spaced apart inside the energy storage cabinet body 1. Moreover, the energy storage cabinet body 1 is provided with a first cabinet body air inlet 3a and a second cabinet body air inlet 3b on a cabinet body wall corresponding to the air intake passage 2. The first cabinet body air inlet 3a and the second cabinet body air inlet 3b both communicate with the air intake passage 2. The air duct switch 4 is disposed spaced apart in the air intake passage 2 corresponding to the first cabinet body air inlet 3a and the second cabinet body air inlet 3b. The air duct switch 4 is located between the first cabinet body air inlet 3a and the second cabinet body air inlet 3b. The air duct switch 4 separates the air intake passage 2 into a first air intake section 21 in fluid communication with the first cabinet body air inlet 3a and a second air intake section 22 in fluid communication with the second cabinet body air inlet 3b. When the air duct switch 4 is open, the first air intake section 21 and the second air intake section 22 communicate with each other. When the air duct switch 4 is closed, the first air intake section 21 and the second air intake section 22 do not communicate with each other. The shape of the air duct switch 4 is adapted to the shape of the air intake passage 2. The air duct switch 4 may be an air damper or a motorized louver 4a, etc. With reference to FIGS. 1 to 3, in some embodiments, the air duct switch 4 is a motorized louver 4a. This arrangement of the air duct switch 4 is relatively simple. Hereinafter, the air duct switch 4 will be described by taking the motorized louver 4a as an example.

A first filtering device is provided at the first cabinet body air inlet 3a. Thus, the first filtering device is capable of filtering air entering the air intake passage 2 from the first cabinet body air inlet 3a. The first filtering device may be made of filtering materials such as non-woven fabric or filter cotton that are capable of filtering tiny particles in the air. The first filtering device may be fixedly installed on an inner side or an outer side of the first cabinet body air inlet 3a by installation methods such as fixing with screws or adhering with structural adhesive.

The air resistance of the second cabinet body air inlet 3b is smaller than the air resistance of the first cabinet body air inlet 3a. A filtering device may not be provided at the second cabinet body air inlet 3b. Alternatively, a filtering device with a filtration grade smaller than that of the first filtering device may be provided at the second cabinet body air inlet 3b. In some embodiments, a second filtering device is provided at the second cabinet body air inlet 3b. The filtration grade of the second filtering device is less than the filtration grade of the first filtering device. At the second cabinet body air inlet 3b, based on the air quality of the local environment where the energy storage system 100 is located, a second filtering device with a filtration grade less than that of the first filtering device may be selectively installed. Thus, the second filtering device is capable of filtering air entering the air intake passage 2 from the second cabinet body air inlet 3b. Moreover, since the filtration grade of the second filtering device is less than that of the first filtering device, the air resistance of the second filtering device is also less than the air resistance of the first filtering device. The derating of the cooling unit 5 caused by the second filtering device is less than the derating of the cooling unit 5 caused by the first filtering device. Hereinafter, the case where no filtering device is provided at the second cabinet body air inlet 3b will be described as an example.

The portion of the air intake passage 2 located on the side of the air duct switch 4 close to the first cabinet body air inlet 3a is the first air intake section 21. The portion of the air intake passage 2 located on the side of the air duct switch 4 close to the second cabinet body air inlet 3b is the second air intake section 22. Thus, the unit air inlet 51 is in fluid communication with the portion of the air intake passage 2 located on the side of the air duct switch 4 close to the first cabinet body air inlet 3a, that is, the unit air inlet 51 is in fluid communication with the first air intake section 21. When the air duct switch 4 is open, the first air intake section 21 and the second air intake section 22 communicate with each other, so that the second air intake section 22 is in fluid communication with the unit air inlet 51 through the first air intake section 21. Thus, the unit air inlet 51 is in fluid communication with both the first cabinet body air inlet 3a and the second cabinet body air inlet 3b through the air intake passage 2. At this time, the cooling unit 5 can draw air simultaneously through the first cabinet body air inlet 3a and the second cabinet body air inlet 3b with smaller air resistance, thereby reducing the derating of the cooling unit 5 caused by the air resistance of the cabinet body air inlets. When the air duct switch 4 is closed, the first air intake section 21 and the second air intake section 22 do not communicate with each other, so that the second air intake section 22 does not communicate with the unit air inlet 51. Thus, the unit air inlet 51 communicates only with the first cabinet body air inlet 3a and does not communicate with the second cabinet body air inlet 3b. At this time, the cooling unit 5 can draw air only through the first cabinet body air inlet 3a provided with the first filtering device, so that all air entering the energy storage system 100 passes through the first filtering device for filtration, ensuring that the energy storage system 100 can meet dust prevention requirements under different environmental conditions.

As described above, by controlling the opening and closing of the air duct switch 4, the cooling unit 5 is provided with a first air intake mode and a second air intake mode. When the cooling unit 5 is in the first air intake mode, the air duct switch 4 is open, and the cooling unit 5 draws air simultaneously through the first cabinet body air inlet 3a and the second cabinet body air inlet 3b. When the cooling unit 5 is in the second air intake mode, the air duct switch 4 is closed, and the cooling unit 5 draws air only through the first cabinet body air inlet 3a.

The energy storage system 100 is provided with a first sensor 6a. The first sensor 6a is a temperature sensor. The first sensor 6a is capable of detecting a temperature inside the energy storage cabinet body 1 in real time or periodically. A specific installation position of the first sensor 6a on the energy storage system 100 may be set according to actual conditions. For example, the first sensor 6a may be disposed inside the energy storage cabinet body 1 corresponding to the battery module, so that the first sensor 6a detects a temperature of the battery module. Hereinafter, the case where the first sensor 6a is configured to detect the temperature of the battery module will be described as an example. The first sensor 6a is electrically connected to the controller 7, thereby enabling the first sensor 6a to send a detected temperature to the controller 7.

The energy storage system 100 is provided with a second sensor 6b. The second sensor 6b is a particulate matter concentration sensor. The second sensor 6b is capable of detecting a particulate matter concentration in an environment where the energy storage system 100 is located in real time or periodically. A specific installation position of the second sensor 6b may be set according to actual conditions. The second sensor 6b may be disposed on the energy storage cabinet body 1. The second sensor 6b may also be disposed at any location in the environment where the energy storage system 100 is located. For example, the second sensor 6b may be disposed on the energy storage cabinet body 1, at the first cabinet body air inlet 3a or the second cabinet body air inlet 3b. The second sensor 6b is electrically connected to the controller 7, thereby enabling the second sensor 6b to send a detected particulate matter concentration to the controller 7. The particulate matter (particulate matter) concentration detected by the second sensor 6b may be PM2.5 or PM10, etc. Hereinafter, the case where the particulate matter concentration detected by the second sensor 6b is PM10 will be described as an example.

The controller 7 is electrically connected to the air duct switch 4. Through the controller 7, opening and closing of the air duct switch 4 can be controlled. The controller 7 may be an original battery management system of the energy storage system 100, or the controller 7 may be an additional control device. Hereinafter, the case where the controller 7 is the battery management system of the energy storage system 100 will be described as an example. The controller 7 is typically configured to control charging and discharging of the battery module, startup and shutdown of the cooling unit 5, and monitor key data within the energy storage system 100.

A thermal management strategy is pre-stored in the controller 7. Moreover, the controller 7 is electrically connected to the cooling unit 5, thereby enabling the controller 7 to control startup and shutdown of the cooling unit 5 according to the thermal management strategy. The controller 7 is capable of, based on the thermal management strategy and according to a temperature detected by the first sensor 6a and a particulate matter concentration detected by the second sensor 6b, controlling opening and closing of the air duct switch 4 to switch an air intake mode of the cooling unit 5.For example, when a content of small-diameter particles in the environment where the energy storage system 100 is located is high, that is, when the particulate matter concentration detected by the second sensor 6b is greater than a preset particulate matter concentration threshold, the controller 7 controls the air duct switch 4 to close, switching the cooling unit 5 to the second air intake mode, so that the cooling unit 5 draws air only through the first cabinet body air inlet 3a provided with the first filtering device. When the content of small-diameter particles in the environment where the energy storage system 100 is located is low, that is, when the particulate matter concentration detected by the second sensor 6b is less than the preset particulate matter concentration threshold, the controller 7 controls the air duct switch 4 to open, switching the cooling unit 5 to the first air intake mode, so that the cooling unit 5 draws air simultaneously through the first cabinet body air inlet 3a and the second cabinet body air inlet 3b with smaller air resistance. Thus, switching of the air intake mode of the cooling unit 5 under different environmental conditions can be achieved, ensuring that the energy storage system 100 can operate under different environmental conditions.

The energy storage cabinet body 1 is provided with a first cabinet body air inlet 3a and a second cabinet body air inlet 3b as two types of cabinet body air inlets, and only the first cabinet body air inlet 3a is provided with a first filtering device. When the air duct switch 4 is open, the cooling unit 5 is connected to the first cabinet body air inlet 3a and the second cabinet body air inlet 3b through the air intake passage 2, thereby enabling the cooling unit 5 to draw air simultaneously through the first cabinet body air inlet 3a and the second cabinet body air inlet 3b. When the air duct switch 4 is closed, the cooling unit 5 is connected only to the first cabinet body air inlet 3a through the air intake passage 2, thereby enabling the cooling unit 5 to draw air only through the first cabinet body air inlet 3a provided with the first filtering device. Thus, the controller 7 can, based on a temperature inside the energy storage cabinet body 1 detected by the first sensor 6a and a particulate matter concentration in an environment where the energy storage system 100 is located detected by the second sensor 6b, control opening and closing of the air duct switch 4 to achieve switching of an air intake mode of the cooling unit 5 under different environmental conditions. This ensures that the energy storage system 100 can meet dust prevention requirements under different environmental conditions while also preventing derating of the cooling unit 5 caused by installation of the filtering device at the air inlet.

Hereinafter, embodiments of the present disclosure will be described in more detail with reference to the accompanying drawings.

An air intake direction of an air inlet (such as the first cabinet body air inlet 3a, the second cabinet body air inlet 3b, or the unit air inlet 51) is a direction perpendicular to a plane of the air inlet. The air intake direction of the first cabinet body air inlet 3a and the air intake direction of the second cabinet body air inlet 3b may be the same or different. The first cabinet body air inlet 3a and the second cabinet body air inlet 3b may be located on the same cabinet body wall of the energy storage cabinet body 1. The first cabinet body air inlet 3a and the second cabinet body air inlet 3b may also be located on different cabinet body walls of the energy storage cabinet body 1. Similarly, the air intake direction of the first cabinet body air inlet 3a and the air intake direction of the unit air inlet 51 may be the same or different.

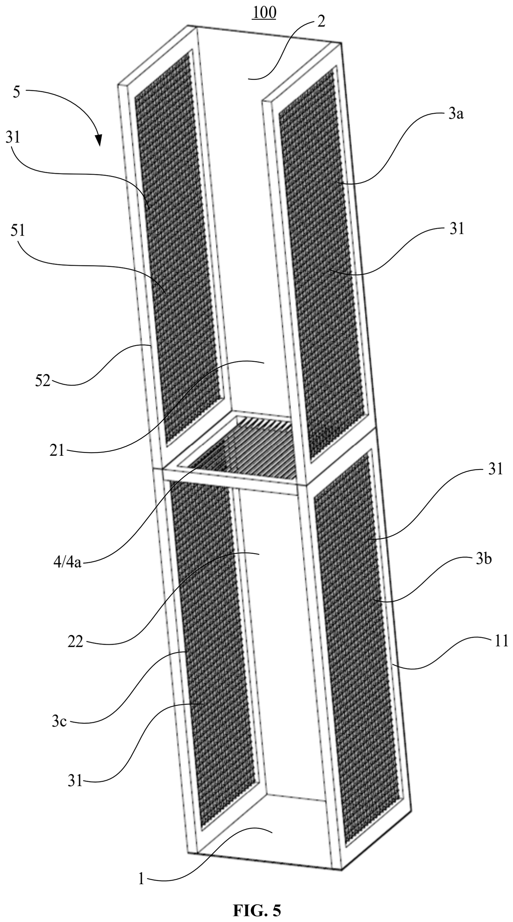

With reference to FIGS. 1 and 5, in some embodiments, the cooling unit 5 has a first housing wall 52 provided with the unit air inlet 51. The energy storage cabinet body 1 has a first cabinet body wall 11 opposite to the first housing wall 52 in the air intake direction of the first cabinet body air inlet 3a. The first cabinet body wall 11 is provided with the first cabinet body air inlet 3a and the second cabinet body air inlet 3b.

Specifically, the air intake directions of the first cabinet body air inlet 3a, the second cabinet body air inlet 3b, and the unit air inlet 51 are the same or approximately the same. This is conducive to reducing the air resistance during the flow of air from the first cabinet body air inlet 3a and the second cabinet body air inlet 3b to the unit air inlet 51. The first cabinet body air inlet 3a and the second cabinet body air inlet 3b are both located on the first cabinet body wall 11 of the energy storage cabinet body 1. The first cabinet body air inlet 3a may be located above, below, or on a horizontal side of the second cabinet body air inlet 3b. Hereinafter, the case where the first cabinet body air inlet 3a and the second cabinet body air inlet 3b are both provided on the first cabinet body wall 11, and the first cabinet body air inlet 3a is located above the second cabinet body air inlet 3b will be described as an example.

With reference to FIGS. 1 and 5, in some embodiments, a protective screen 31 is provided at each of the first cabinet body air inlet 3a and the second cabinet body air inlet 3b. Thus, by installing the protective screen 31 at the first cabinet body air inlet 3a and the second cabinet body air inlet 3b, the protective screen 31 is capable of preventing large-sized debris from passing through the first cabinet body air inlet 3a and the second cabinet body air inlet 3b and entering the air intake passage 2. Similarly, the protective screen 31 may not be provided at the unit air inlet 51, or the protective screen 31 may be provided at the unit air inlet 51. When the protective screen 31 is provided at the unit air inlet 51, the protective screen 31 is capable of preventing large-sized debris from passing through the unit air inlet 51 and entering the cooling unit 5.

With reference to FIGS. 1 and 5, in some embodiments, the unit air inlet 51 is located on a side of the air duct switch 4 close to the first cabinet body air inlet 3a. Thus, the unit air inlet 51 is located above the air duct switch 4, which facilitates direct connection between the unit air inlet 51 and the first air intake section 21, and also separates the unit air inlet 51 from the second air intake section 22.

Both the first cabinet body air inlet 3a and the unit air inlet 51 are located above the second cabinet body air inlet 3b. The first cabinet body air inlet 3a and the unit air inlet 51 may be arranged directly opposite each other. Alternatively, the first cabinet body air inlet 3a and the unit air inlet 51 may be arranged offset from each other. With reference to FIGS. 1 and 5, in some embodiments, the first cabinet body air inlet 3a and the unit air inlet 51 are opposite each other in the air intake direction of the first cabinet body air inlet 3a. The first cabinet body air inlet 3a and the unit air inlet 51 are arranged directly opposite each other in the air intake direction of the first cabinet body air inlet 3a, which is conducive to reducing air resistance during the flow of air from the first cabinet body air inlet 3a to the unit air inlet 51.

The area of the first cabinet body air inlet 3a and the area of the second cabinet body air inlet 3b may be equal or unequal. With reference to FIGS. 1 and 5, in some embodiments, the area of the first cabinet body air inlet 3a is greater than the area of the second cabinet body air inlet 3b. The sum of the areas of the first cabinet body air inlet 3a and the second cabinet body air inlet 3b is related to the area of the first housing wall 52. Since the cooling unit 5 draws air through the first cabinet body air inlet 3a in both the first air intake mode and the second air intake mode, and the air resistance of the first cabinet body air inlet 3a is greater than that of the second cabinet body air inlet 3b, setting the area of the first cabinet body air inlet 3a to be greater than that of the second cabinet body air inlet 3b is conducive to ensuring sufficient air volume of the cooling unit 5.

In some embodiments, a ratio between an area of the first cabinet body air inlet 3a and an area of the second cabinet body air inlet 3b is 1 to 3.

Specifically, the area of the first cabinet body air inlet 3a is N times an area of the second cabinet body air inlet 3b, where N is from 1 to 3. For example, N may be 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, or 3, etc. Setting a value range of N in this way is conducive to ensuring that the cooling unit 5 has a sufficient air volume for cooling. Further, the ratio between the area of the first cabinet body air inlet 3a and the area of the second cabinet body air inlet 3b is 2.

The area of the first cabinet body air inlet 3a and an area of the unit air inlet 51 may be equal or unequal. With reference to FIGS. 1 and 5, in some embodiments, the area of the first cabinet body air inlet 3a is greater than the area of the unit air inlet 51. This is also conducive to ensuring that the cooling unit 5 has a sufficient air volume for cooling.

The area of the second cabinet body air inlet 3b and the area of the unit air inlet 51 may be equal or unequal. With reference to FIGS. 1 and 5, in some embodiments, the area of the unit air inlet 51 is greater than the area of the second cabinet body air inlet 3b. This is also conducive to ensuring that the cooling unit 5 has a sufficient air volume for cooling.

In some embodiments, from an end of the air duct switch 4 close to the unit air inlet 51 to an end close to the first cabinet body air inlet 3a, the air duct switch 4 is arranged to gradually tilt toward a direction close to the second cabinet body air inlet 3b. The air duct switch 4 is arranged to gradually tilt downward in a direction from the unit air inlet 51 to the first cabinet body air inlet 3a, which is conducive to achieving a design where an area of the first cabinet body air inlet 3a is greater than an area of the unit air inlet 51, and the area of the unit air inlet 51 is greater than an area of the second cabinet body air inlet 3b.

With reference to FIGS. 1 and 5, in some embodiments, the first housing wall 52 and a cabinet body wall of the energy storage cabinet body 1 enclose to form the air intake passage 2. The first cabinet body wall 11 of the energy storage cabinet body 1 is opposite to the first housing wall 52 in an air intake direction of the first cabinet body air inlet 3a. The air duct switch 4 is disposed between the first housing wall 52 and the first cabinet body wall 11.

Specifically, the air duct switch 4 has two states, open and closed. When the air duct switch 4 is in the closed state, the air duct switch 4 can prevent air flow between the first air intake section 21 and the second air intake section 22. When the air duct switch 4 is in the open state, the air duct switch 4 connects the first air intake section 21 and the second air intake section 22.

With reference to FIG. 5, in some embodiments, the second air intake section 22 is provided with a third cabinet body air inlet 3c. The third cabinet body air inlet 3c is located below the cooling unit 5. The third cabinet body air inlet 3c is opposite to the second cabinet body air inlet 3b in an air intake direction of the second cabinet body air inlet 3b. Electrical components are usually disposed inside the energy storage cabinet body 1 and below the cooling unit 5. When the cooling unit 5 is in the first air intake mode, air in the second air intake section 22 can flow from the third cabinet body air inlet 3c to below the cooling unit 5, so as to cool the electrical components located below the cooling unit 5.

There are multiple specific implementation methods for the controller 7 to control opening and closing of the air duct switch 4 based on a temperature detected by the first sensor 6a and a particulate matter concentration detected by the second sensor 6b. In some embodiments, if the temperature detected by the first sensor 6a is greater than a first temperature threshold or the particulate matter concentration detected by the second sensor 6b is less than a first particulate matter concentration threshold, the controller 7 controls the air duct switch 4 to open. If the temperature detected by the first sensor 6a is less than the first temperature threshold and the particulate matter concentration detected by the second sensor 6b is greater than the first particulate matter concentration threshold, the controller 7 controls the air duct switch 4 to close.

Specifically, the temperature detected by the first sensor 6a is T, the first temperature threshold is T1, the particulate matter concentration detected by the second sensor 6b is P, and the first particulate matter concentration threshold is P1.

After the controller 7 acquires the temperature T detected by the first sensor 6a and the particulate matter concentration P detected by the second sensor 6b, the controller 7 may first determine a magnitude relationship between the particulate matter concentration P detected by the second sensor 6b and the first particulate matter concentration threshold P1. If P < P1, the controller 7 controls the air duct switch 4 to open. If P > P1, the controller 7 then determines a magnitude relationship between the temperature T detected by the first sensor 6a and the first temperature threshold T1. If T < T1, the controller 7 controls the air duct switch 4 to close. If T > T1, the controller 7 controls the air duct switch 4 to open. Thus, while ensuring that the energy storage system 100 can meet dust prevention requirements under different environmental conditions, the energy storage system 100 is provided with higher cooling efficiency and safety performance.

After the controller 7 acquires the temperature T detected by the first sensor 6a and the particulate matter concentration P detected by the second sensor 6b, the controller 7 may also first determine a magnitude relationship between the temperature T detected by the first sensor 6a and the first temperature threshold T1. If T > T1, the controller 7 controls the air duct switch 4 to open. If T < T1, the controller 7 then determines a magnitude relationship between the particulate matter concentration P detected by the second sensor 6b and the first particulate matter concentration threshold P1. If P < P1, the controller 7 controls the air duct switch 4 to open. If P > P1, the controller 7 controls the air duct switch 4 to close. Thus, while ensuring that the energy storage system 100 can meet dust prevention requirements under different environmental conditions, the energy storage system 100 is provided with higher cooling efficiency and safety performance.

In some embodiments, the controller 7 determines whether the cooling unit 5 is in a working state. If the cooling unit 5 is in a non-working state, the controller 7 controls the air duct switch 4 to close. If the cooling unit 5 is in the working state, the controller 7 determines a magnitude relationship between the particulate matter concentration P detected by the second sensor 6b and the first particulate matter concentration threshold P1, or determines a magnitude relationship between the temperature T detected by the first sensor 6a and the first temperature threshold T1.

Specifically, the controller 7 first determines whether the cooling unit 5 is in a working state. The cooling unit 5 in a non-working state or standby state does not have a derating risk, so the controller 7 controls the air duct switch 4 to close, to ensure that external dust does not enter the energy storage system 100.

In some embodiments, if the temperature detected by the first sensor 6a is less than a second temperature threshold and the particulate matter concentration detected by the second sensor 6b is greater than a second particulate matter concentration threshold, then based on a preset correspondence, the temperature detected by the first sensor 6a, and the particulate matter concentration detected by the second sensor 6b, calculate an opening degree value of the air duct switch 4. If the calculated opening degree value of the air duct switch 4 is less than a first preset opening degree value, adjust the opening degree of the air duct switch 4 to the first preset opening degree value. If the calculated opening degree value of the air duct switch 4 is greater than the first preset opening degree value and less than a second preset opening degree value, adjust the opening degree of the air duct switch 4 to the calculated opening degree value. If the calculated opening degree value of the air duct switch 4 is greater than the second preset opening degree value, adjust the opening degree of the air duct switch 4 to the second preset opening degree value.

Specifically, the second temperature threshold is T2, the second particulate matter concentration threshold is P2, a calculated value of the opening degree of the air duct switch 4 is F, the first preset opening degree value is F1, and the second preset opening degree value is F2. The second preset opening degree value F2 is greater than the first preset opening degree value F1, and 0 ≤ F1 < F2 ≤ 1. The preset correspondence is configured to characterize a correspondence relationship among the opening degree value F, the temperature T, and the particulate matter concentration P. The preset correspondence may be a correspondence table or a formula, etc.

If T < T2, the controller 7 controls the air duct switch 4 to close. If T > T2 and P < P2, the controller 7 controls the air duct switch 4 to open, that is, adjusts the opening degree of the air duct switch 4 to 1. If T > T2 and P > P2, the controller 7 calculates the opening degree value of the air duct switch 4 based on T, P, and the preset correspondence, to acquire the calculated opening degree value F of the air duct switch 4. If F < F1, the controller 7 adjusts the opening degree of the air duct switch 4 to F1. If F1 < F < F2, the controller 7 adjusts the opening degree of the air duct switch 4 to F. If F > F2, the controller 7 adjusts the opening degree of the air duct switch 4 to F2.

Correspondingly, another embodiment of the present disclosure further provides a control method for an energy storage system, which can be implemented based on the energy storage system provided in the foregoing embodiments. Hereinafter, the control method for the energy storage system provided by another embodiment of the present disclosure will be described in detail with reference to the accompanying drawings. For parts that are the same as or correspond to those in the previous embodiment, reference may be made to the corresponding descriptions in the foregoing embodiments, and detailed description will not be repeated here.

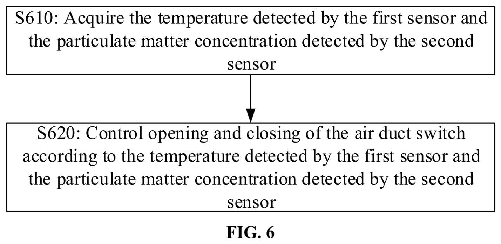

FIG. 6 is a flowchart of a control method for an energy storage system according to an embodiment of the present disclosure.

With reference to FIG. 6, the control method for the energy storage system includes the following operations.

Operation S610, acquiring a temperature detected by a first sensor and a particulate matter concentration detected by a second sensor.

Specifically, the first sensor 6a detects a temperature T inside the energy storage cabinet body 1 in real time. The second sensor 6b detects a particulate matter concentration P in an environment where the energy storage system 100 is located in real time. The controller 7 is capable of acquiring the temperature T detected by the first sensor 6a and the particulate matter concentration P detected by the second sensor 6b.

Operation S620, controlling opening and closing of an air duct switch according to the temperature detected by the first sensor and the particulate matter concentration detected by the second sensor.

Specifically, after acquiring the temperature T detected by the first sensor 6a and the particulate matter concentration P detected by the second sensor 6b, the controller 7 is capable of controlling opening and closing of the air duct switch 4 according to the temperature detected by the first sensor 6a and the particulate matter concentration detected by the second sensor 6b.

For example, when a content of small-diameter particles in the environment where the energy storage system 100 is located is high, that is, when a particulate matter concentration detected by the second sensor 6b is greater than a preset particulate matter concentration threshold, the controller 7 controls the air duct switch 4 to close, switching the cooling unit 5 to a second air intake mode, so that the cooling unit 5 draws air only through the first cabinet body air inlet 3a provided with a first filtering device. When the content of small-diameter particles in the environment where the energy storage system 100 is located is low, that is, when the particulate matter concentration detected by the second sensor 6b is less than the preset particulate matter concentration threshold, the controller 7 controls the air duct switch 4 to open, switching the cooling unit 5 to a first air intake mode, so that the cooling unit 5 draws air simultaneously through the first cabinet body air inlet 3a and the second cabinet body air inlet 3b having smaller air resistance.

In some embodiments, operation S620 includes, if a temperature detected by the first sensor 6a is greater than a first temperature threshold or a particulate matter concentration detected by the second sensor 6b is less than a first particulate matter concentration threshold, controlling the air duct switch 4 to open. If the temperature detected by the first sensor 6a is less than the first temperature threshold and the particulate matter concentration detected by the second sensor 6b is greater than the first particulate matter concentration threshold, controlling the air duct switch 4 to close.

Specifically, after the controller 7 acquires the temperature T detected by the first sensor 6a and the particulate matter concentration P detected by the second sensor 6b, the controller 7 may first determine a magnitude relationship between the particulate matter concentration P detected by the second sensor 6b and the first particulate matter concentration threshold P1. If P < P1, the controller 7 controls the air duct switch 4 to open. If P > P1, the controller 7 then determines a magnitude relationship between the temperature T detected by the first sensor 6a and the first temperature threshold T1. If T < T1, the controller 7 controls the air duct switch 4 to close. If T > T1, the controller 7 controls the air duct switch 4 to open. Thus, while ensuring that the energy storage system 100 can meet dust prevention requirements under different environmental conditions, the energy storage system 100 is provided with higher cooling efficiency and safety performance. Herein, in some embodiments, P1 ranges from 200 µg/m³ to 400 µg/m³, and T1 ranges from 30°C to 50°C. For example, P1 may be 200 µg/m³, 210 µg/m³, 220 µg/m³, 230 µg/m³, 240 µg/m³, 250 µg/m³, 260 µg/m³, 270 µg/m³, 280 µg/m³, 290 µg/m³, 300 µg/m³, 310 µg/m³, 320 µg/m³, 330 µg/m³, 340 µg/m³, 350 µg/m³, 360 µg/m³, 370 µg/m³, 380 µg/m³, 390 µg/m³, or 400 µg/m³, etc. T1 may be 30°C, 31°C, 32°C, 33°C, 34°C, 35°C, 36°C, 37°C, 38°C, 39°C, 40°C, 41°C, 42°C, 43°C, 44°C, 45°C, 46°C, 47°C, 48°C, 49°C, or 50°C, etc.

After the controller 7 acquires the temperature T detected by the first sensor 6a and the particulate matter concentration P detected by the second sensor 6b, the controller 7 may also first determine a magnitude relationship between the temperature T detected by the first sensor 6a and the first temperature threshold T1. If T > T1, the controller 7 controls the air duct switch 4 to open. If T < T1, the controller 7 then determines a magnitude relationship between the particulate matter concentration P detected by the second sensor 6b and the first particulate matter concentration threshold P1. If P < P1, the controller 7 controls the air duct switch 4 to open. If P > P1, the controller 7 controls the air duct switch 4 to close. Thus, while ensuring that the energy storage system 100 can meet dust prevention requirements under different environmental conditions, the energy storage system 100 is provided with higher cooling efficiency and safety performance.

In some embodiments, operation S620 includes, if the temperature detected by the first sensor 6a is less than a second temperature threshold and the particulate matter concentration detected by the second sensor 6b is greater than a second particulate matter concentration threshold, then based on a preset correspondence, the temperature detected by the first sensor 6a, and the particulate matter concentration detected by the second sensor 6b, calculate an opening degree value of the air duct switch 4. If the calculated opening degree value of the air duct switch 4 is less than a first preset opening degree value, adjust the opening degree of the air duct switch 4 to the first preset opening degree value. If the calculated opening degree value of the air duct switch 4 is greater than the first preset opening degree value and less than a second preset opening degree value, adjust the opening degree of the air duct switch 4 to the calculated opening degree value. If the calculated opening degree value of the air duct switch 4 is greater than the second preset opening degree value, adjust the opening degree of the air duct switch 4 to the second preset opening degree value, where the second preset opening degree value is greater than the first preset opening degree value.

If T < T2, the controller 7 controls the air duct switch 4 to close. If T > T2 and P < P2, the controller 7 controls the air duct switch 4 to open, that is, adjusts the opening degree of the air duct switch 4 to 1. If T > T2 and P > P2, the controller 7 calculates the opening degree value F of the air duct switch 4 based on T, P, and the preset correspondence. If F < F1, the controller 7 adjusts the opening degree of the air duct switch 4 to F1. If F1 < F < F2, the controller 7 adjusts the opening degree of the air duct switch 4 to F. If F > F2, the controller 7 adjusts the opening degree of the air duct switch 4 to F2.

In some embodiments, operation S620 includes acquiring operating parameters of the cooling unit 5. If the acquired operating parameters of the cooling unit 5 indicate that the cooling unit 5 is in a standby state, then control the air duct switch 4 to close. If the acquired operating parameters of the cooling unit 5 indicate that the cooling unit 5 is in a working state, then based on a temperature detected by the first sensor 6a and a particulate matter concentration detected by the second sensor 6b, control opening and closing of the air duct switch 4.

Specifically, the controller 7 first determines whether the cooling unit 5 is in a working state. The cooling unit 5 in a non-working state or standby state does not have a derating risk, so the controller 7 controls the air duct switch 4 to close, to ensure that external dust does not enter the energy storage system 100.

In some embodiments, the control method for the energy storage system includes the following operations.

Operation 1, acquire a temperature detected by a first sensor and a particulate matter concentration detected by a second sensor.

Operation 2, determine whether a cooling unit is in a working state.

Specifically, determine whether a fan of the cooling unit 5 is in a working state. The cooling unit 5 in a non-working state does not have a derating risk, therefore close an air duct switch 4 to ensure that external dust does not enter an energy storage system 100. If yes, then execute operation 3. If no, then execute operation 5.

Operation 3, determine whether the particulate matter concentration detected by the second sensor is greater than a first particulate matter concentration threshold.

Specifically, if yes, it indicates that a content of small-diameter particles in an environment where the energy storage system 100 is located is low, then execute operation 6, control the air duct switch 4 to open to ensure a cooling capacity of the cooling unit 5. If no, then execute operation 4.

Operation 4, determine whether the temperature detected by the first sensor is greater than a first temperature threshold.

Specifically, if yes, it indicates that the energy storage system 100 has a risk of overheating, then execute operation 6, prioritizing ensuring the cooling capacity of the cooling unit 5. If no, then execute operation 5.

Operation 5, control the air duct switch 4 to close.

Operation 6, control the air duct switch 4 to open.

In some embodiments, the control method for the energy storage system includes the following operations.

Operation 1, acquire a temperature detected by a first sensor and a particulate matter concentration detected by a second sensor.

Operation 2, determine whether the temperature detected by the first sensor is greater than a third temperature threshold.

Specifically, if no, then execute operation 3. If yes, it indicates that the energy storage system 100 has a risk of overheating, control the air duct switch 4 to open, that is, adjust the opening degree of the air duct switch 4 to 1, prioritizing ensuring the cooling capacity of the cooling unit 5. The third temperature threshold is T3, and T3 > T2. Herein, in some embodiments, T3 ranges from 40°C to 60°C. T3 may be 40°C, 41°C, 42°C, 43°C, 44°C, 45°C, 46°C, 47°C, 48°C, 49°C, 50°C, 51°C, 52°C, 53°C, 54°C, 55°C, 56°C, 57°C, 58°C, 59°C, or 60°C, etc.

Operation 3, based on a preset correspondence, the temperature detected by the first sensor, and the particulate matter concentration detected by the second sensor, calculate an opening degree value of the air duct switch.

Specifically, in some embodiments, the preset correspondence is F = F1 + (T - T2) / (T3 - T2) + (P2 - P) / (2 * P2).

In some embodiments, F1 ranges from 0.4 to 0.6, and F2 ranges from 0.8 to 1. For example, F1 may be 0.4, 0.41, 0.42, 0.43, 0.44, 0.45, 0.46, 0.47, 0.48, 0.49, 0.5, 0.51, 0.52, 0.53, 0.54, 0.55, 0.56, 0.57, 0.58, 0.59, or 0.6, etc., and F2 may be 0.8, 0.81, 0.82, 0.83, 0.84, 0.85, 0.86, 0.87, 0.88, 0.89, 0.9, 0.91, 0.92, 0.93, 0.94, 0.95, 0.96, 0.97, 0.98, 0.99, or 1, etc.

In some embodiments, P2 ranges from 200 µg/m³ to 400 µg/m³, and T2 ranges from 30°C to 50°C. For example, P2 may be 200 µg/m³, 210 µg/m³, 220 µg/m³, 230 µg/m³, 240 µg/m³, 250 µg/m³, 260 µg/m³, 270 µg/m³, 280 µg/m³, 290 µg/m³, 300 µg/m³, 310 µg/m³, 320 µg/m³, 330 µg/m³, 340 µg/m³, 350 µg/m³, 360 µg/m³, 370 µg/m³, 380 µg/m³, 390 µg/m³, or 400 µg/m³, etc., and T2 may be 30°C, 31°C, 32°C, 33°C, 34°C, 35°C, 36°C, 37°C, 38°C, 39°C, 40°C, 41°C, 42°C, 43°C, 44°C, 45°C, 46°C, 47°C, 48°C, 49°C, or 50°C, etc.

In some embodiments, F1 = 0.5, F2 = 1, T2 = 35, T3 = 45, P2 = 300, and F = 0.5 + (T - 35) / 10 + (300 - P) / 600.

Operation 4, determine whether a calculated value of an opening degree of an air duct switch is greater than a first preset opening degree value.

Specifically, if yes, then execute operation 5; if no, then execute operation 6.

Operation 5, determine whether the calculated value of the opening degree of the air duct switch is greater than a second preset opening degree value.

Specifically, if yes, then execute operation 7; if no, then adjust the opening degree of the air duct switch to the calculated value of the opening degree or the second preset opening degree value.

Operation 6, adjust the opening degree of the air duct switch to the first preset opening degree value.

Operation 7, adjust the opening degree of the air duct switch to the second preset opening degree value.

Person of ordinary skill in the art can understand that the above-mentioned implementation manners are specific embodiments for realizing the present disclosure. In practical applications, various changes can be made in form and detail without departing from the scope of the present disclosure. Any person skilled in the art can make various changes and modifications without departing from the scope of the present disclosure. Therefore, the protection scope of the present disclosure should be subject to the scope defined by the claims.

## Claims

1. An energy storage system, comprising:
an energy storage cabinet body (1), configured to accommodate a battery module and including an air intake passage (2), and a first cabinet body air inlet (3a) and a second cabinet body air inlet (3b) that are in fluid communication with the air intake passage (2);
a first filtering device, disposed at the first cabinet body air inlet (3a);
an air duct switch (4), disposed inside the air intake passage (2) and between the first cabinet body air inlet (3a) and the second cabinet body air inlet (3b), and configured to separate the air intake passage (2) into a first air intake section (21) in fluid communication with the first cabinet body air inlet (3a) and a second air intake section (22) in fluid communication with the second cabinet body air inlet (3b);
a cooling unit (5), disposed inside the energy storage cabinet body (1) and including a unit air inlet (51) in fluid communication with the first air intake section (21);
a first sensor (6a), configured to detect a temperature inside the energy storage cabinet body (1);
a second sensor (6b), configured to detect a particulate matter concentration in an environment where the energy storage system is located; and
a controller (7), electrically connected to each of the first sensor (6a), the second sensor (6b), and the air duct switch (4) and configured to control opening and closing of the air duct switch (4) according to the temperature detected by the first sensor (6a) and the particulate matter concentration detected by the second sensor (6b).

2. The energy storage system according to claim 1, wherein in response to the air duct switch (4) being opened, the first air intake section (21) is in fluid communication with the second air intake section (22) by the air duct switch (4), and in response to the air duct switch (4) being closed, the first air intake section (21) is separated from the second air intake section (22) by the air duct switch (4).

3. The energy storage system according to claim 1 or claim 2, wherein the first cabinet body air inlet (3a) is spaced from the unit air inlet (51) in an air intake direction of the first cabinet body air inlet (3a).

4. The energy storage system according to any one of claims 1 to 3, wherein from an end of the air duct switch (4) adjacent to the unit air inlet (51) to an end of the air duct switch (4) adjacent to the first cabinet body air inlet (3a), the air duct switch (4) is arranged to gradually tilt toward the second cabinet body air inlet (3b).

5. The energy storage system according to any one of claims 1 to 4, wherein the first cabinet body air inlet (3a) has an area greater than an area of the second cabinet body air inlet (3b).

6. The energy storage system according to any one of claims 1 to 5, wherein a ratio of the area of the first cabinet body air inlet (3a) to the area of the second cabinet body air inlet (3b) is 1 to 3.

7. The energy storage system according to claim 6, wherein the ratio of the area of the first cabinet body air inlet (3a) to the area of the second cabinet body air inlet (3b) is 2.

8. The energy storage system according to any one of claims 1 to 7, further comprising:
a second filtering device, disposed at the second cabinet body air inlet (3b), wherein a filtration grade of the second filtering device is lower than a filtration grade of the first filtering device.

9. The energy storage system according to any one of claims 1 to 8, wherein the cooling unit (5) has a first housing wall (52) provided with the unit air inlet (51), the first housing wall (52) and a cabinet body wall of the energy storage cabinet body (1) enclose to form the air intake passage (2), the energy storage cabinet body (1) has a first cabinet body wall (11) opposite to the first housing wall (52), the first cabinet body air inlet (3a) and the second cabinet body air inlet (3b) are disposed on the first cabinet body wall (11), and the air duct switch (4) is disposed between the first housing wall (52) and the first cabinet body wall (11).

10. The energy storage system according to any one of claims 1 to 9, wherein the air duct switch (4) is a motorized louver (4a).

11. The energy storage system according to any one of claims 1 to 10, further comprising:
a protective screen (31), disposed at each of the first cabinet body air inlet (3a) and the second cabinet body air inlet (3b).

12. A control method for an energy storage system, applied to the energy storage system according to any one of claims 1 to 11, and comprising:
acquiring the temperature detected by the first sensor (6a) and the particulate matter concentration detected by the second sensor (6b); and
controlling opening and closing of the air duct switch (4) according to the temperature detected by the first sensor (6a) and the particulate matter concentration detected by the second sensor (6b).

13. The control method according to claim 12, wherein controlling opening and closing of the air duct switch (4) according to the temperature detected by the first sensor (6a) and the particulate matter concentration detected by the second sensor (6b) includes:
in response to the temperature detected by the first sensor (6a) being greater than a first temperature threshold or the particulate matter concentration detected by the second sensor (6b) being less than a first particulate matter concentration threshold, controlling the air duct switch (4) to open; and
in response to the temperature detected by the first sensor (6a) being less than the first temperature threshold and the particulate matter concentration detected by the second sensor (6b) is greater than the first particulate matter concentration threshold, controlling the air duct switch (4) to close.

14. The control method according to claim 12 or claim 13, wherein controlling opening and closing of the air duct switch (4) according to the temperature detected by the first sensor (6a) and the particulate matter concentration detected by the second sensor (6b) includes:
in response to the temperature detected by the first sensor (6a) being less than a second temperature threshold and the particulate matter concentration detected by the second sensor (6b) being greater than a second particulate matter concentration threshold, calculating an opening degree value of the air duct switch (4) based on a preset correspondence, the temperature detected by the first sensor (6a), and the particulate matter concentration detected by the second sensor (6b), wherein the preset correspondence is configured to characterize a correspondence relationship among the opening degree value, the temperature, and the particulate matter concentration;
in response to the calculated opening degree value of the air duct switch (4) being less than a first preset opening degree value, adjusting an opening degree of the air duct switch (4) to the first preset opening degree value;
in response to the calculated opening degree value of the air duct switch (4) being greater than the first preset opening degree value and less than a second preset opening degree value, adjusting the opening degree of the air duct switch (4) to the calculated opening degree value of the air duct switch (4), wherein the second preset opening degree value is greater than the first preset opening degree value; and
in response to the calculated opening degree value of the air duct switch (4) being greater than the second preset opening degree value, adjusting the opening degree of the air duct switch (4) to the second preset opening degree value.

15. The control method according to any one of claims 12 to 14, wherein controlling opening and closing of the air duct switch (4) according to the temperature detected by the first sensor (6a) and the particulate matter concentration detected by the second sensor (6b) includes:
acquiring an operating parameter of the cooling unit (5);
in response to the acquired operating parameter of the cooling unit (5) indicating that the cooling unit (5) is in a standby state, controlling the air duct switch (4) to close; and
in response to the acquired operating parameter of the cooling unit (5) indicating that the cooling unit (5) is in a working state, controlling opening and closing of the air duct switch (4) according to the temperature detected by the first sensor (6a) and the particulate matter concentration detected by the second sensor (6b).
